# EUROPEAN PATENT APPLICATION

(11) **EP 4 714 579 A1**
(43) Date of publication of application: **25.03.2026**
(21) Application number: 23937463.0
(22) Date of filing: 16.05.2023
(51) Int. Cl.: B23H 7/36

(54) **FILTER FOR ELECTRICAL DISCHARGE MACHINE AND ELECTRICAL DISCHARGE MACHINE**

(71) Applicant: FANUC CORPORATION, Oshino-mura Minamitsuru-gun Yamanashi 401-0597 (JP)
(72) Inventor: KASAI, Hirotsugu, Minamitsuru-gun, Yamanashi 401-0597 (JP); MAKINO, Yoshinori, Minamitsuru-gun, Yamanashi 401-0597 (JP)
(74) Representative: Schmidt, Steffen J.
(86) International application number: PCT/JP2023/018221
(87) International publication number: WO 2024/236720

(57) **Abstract**

This filter for an electrical discharge machine comprises: a filter material capable of removing sludge included in a processing liquid; and a chemical agent for lowering the specific resistance value of the processing liquid.

## Description

### TECHNICAL FIELD

The present disclosure relates to an electrical discharge machine filter (filter for electrical discharge machine) and an electrical discharge machine.

### BACKGROUND ART

An electrical discharge machine includes a working fluid supply device that supplies a working fluid. JP H05-002816 U discloses a working fluid supply device for a wire electrical discharge machine that includes a filter.

### SUMMARY OF THE INVENTION

Recently, there has been a demand for a more satisfactory electrical discharge machine.

A first aspect of the present disclosure is characterized by an electrical discharge machine filter, comprising: a filter medium configured to remove sludge contained in a working fluid; and a chemical agent configured to lower a resistivity of the working fluid.

A second aspect of the present disclosure is characterized by an electrical discharge machine, wherein the electrical discharge machine comprises the electrical discharge machine filter according to the first aspect.

### BRIEF DESCRIPTION OF DRAWINGS

[FIG. 1] FIG. 1 is a schematic diagram of an electrical discharge machine;
[FIG. 2] FIG. 2 is a partial cross-sectional view of an electrical discharge machine filter;
[FIG. 3] FIG. 3 is a partial cross-sectional view of the electrical discharge machine filter;
[FIG. 4] FIG. 4 is a schematic diagram of a filter medium;
[FIG. 5] FIG. 5 is a schematic diagram of a water-soluble container;
[FIG. 6] FIG. 6 is a schematic diagram of a fluid-permeable container;
[FIG. 7] FIG. 7 is a partial cross-sectional view of the electrical discharge machine filter; and
[FIG. 8] FIG. 8 is a partial cross-sectional view of the electrical discharge machine filter.

### DETAILED DESCRIPTION OF THE INVENTION

An electrical discharge machine uses an electrical discharge machine filter (a filter for an electrical discharge machine) to filter a working fluid that has been used in the machining of a workpiece. By filtering the working fluid, sludge contained in the working fluid is removed, and the sludge adheres to the electrical discharge machine filter.

In the case where the electrical discharge machine filter is clogged due to the adhesion of the sludge and the resistance of the electrical discharge machine filter increases, an operator needs to replace the electrical discharge machine filter. The electrical discharge machine filter after use is usually discarded without being reused. In order to reduce the number of times of replacement of the electrical discharge machine filter and reduce the amount of discarded electrical discharge machine filters, it is required to increase the life of the electrical discharge machine filter.

In the case where the electrical discharge machine performs electrical discharge machining on a workpiece made of an aluminum-based material, the life of the electrical discharge machine filter is shorter than in the case where the electrical discharge machine performs electrical discharge machining on a workpiece made of an iron-based material. In the case where electrical discharge machining is performed on a workpiece made of an aluminum-based material, aluminum hydroxide is generated in the working fluid. Aluminum hydroxide has a relatively high viscosity, and it is considered that the life of the filter is shortened by adhesion of the aluminum hydroxide to the filter. The life of the electrical discharge machine filter in the case where electrical discharge machining is performed on a workpiece made of an aluminum-based material is 10% to 25% of the life of the electrical discharge machine filter in the case where electrical discharge machining is performed on a workpiece made of an iron-based material.

Therefore, in the case where electrical discharge machining is performed on a workpiece made of an aluminum-based material by the electrical discharge machine, the number of times of replacement of the electrical discharge machine filter by an operator increases, and there is a problem that the amount of discarded filters increases. An object of the technique of the present disclosure is to provide an electrical discharge machine filter having a long life, and an electrical discharge machine capable of extending the life of the electrical discharge machine filter.

### [First Embodiment]

### [Configuration of Electrical Discharge Machine]

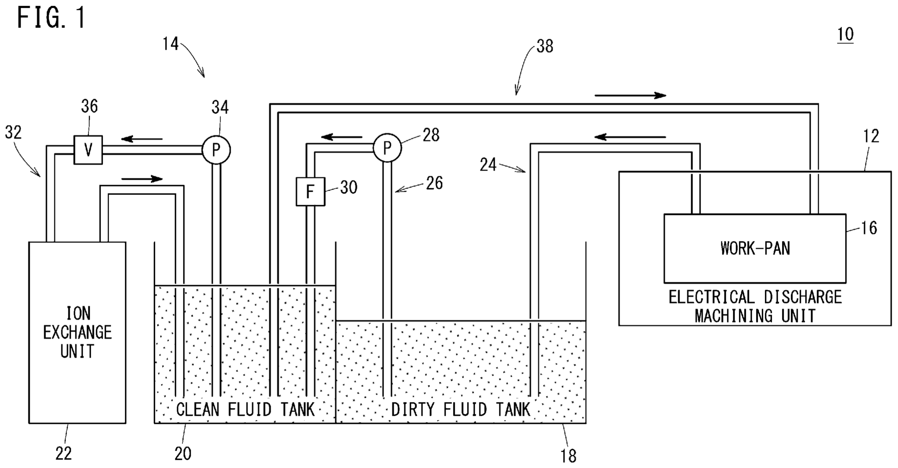

FIG. 1 is a schematic diagram of an electrical discharge machine 10. The electrical discharge machine 10 includes an electrical discharge machining unit 12, and a working fluid processing unit 14. The electrical discharge machine 10 is, for example, a wire electrical discharge machine, but is not limited thereto.

The electrical discharge machining unit 12 includes a work-pan 16. The electrical discharge machining unit 12 performs electrical discharge machining on a workpiece in a working fluid stored in the work-pan 16.

The working fluid processing unit 14 includes a dirty fluid tank 18, a clean fluid tank 20, and an ion exchange unit 22.

The working fluid that has been used in the electrical discharge machining is discharged from the work-pan 16 to the dirty fluid tank 18 through a drainage path 24. The working fluid discharged from the work-pan 16 contains sludge generated during the electrical discharge machining.

The working fluid stored in the dirty fluid tank 18 is sent to the clean fluid tank 20 through a filtration path 26. The filtration path 26 is provided with a first pump 28 and an electrical discharge machine filter 30. The first pump 28 pumps up the working fluid in the dirty fluid tank 18 and sends the working fluid to the clean fluid tank 20. The electrical discharge machine filter 30 filters the working fluid sent from the dirty fluid tank 18 to the clean fluid tank 20, and removes sludge from the working fluid.

The working fluid stored in the clean fluid tank 20 circulates between the clean fluid tank 20 and the ion exchange unit 22 through a circulation path 32. The circulation path 32 is provided with a second pump 34 and a valve 36. The second pump 34 circulates the working fluid between the clean fluid tank 20 and the ion exchange unit 22. The valve 36 adjusts the amount of the working fluid that circulates between the clean fluid tank 20 and the ion exchange unit 22.

The ion exchange unit 22 exchanges ions in the working fluid. The ion exchange unit 22 includes an ion exchange resin. The ion exchange resin captures ions contained in the working fluid and releases hydrogen ions and hydroxide ions. The ion exchange resin may release sodium ions. The released hydrogen ions and hydroxide ions combine to form water.

The ion exchange resin may be configured not to capture at least one cation selected from potassium ion, calcium ion, sodium ion, and magnesium ion. Further, the ion exchange resin may be configured not to capture at least one anion selected from sulfate ion, sulfite ion, disulfite ion, hydrogen sulfite ion, nitrate ion, and nitrite ion.

The working fluid whose resistivity has been adjusted is sent from the clean fluid tank 20 to the work-pan 16 through a supply path 38.

### [Configuration of Electrical Discharge Machine Filter]

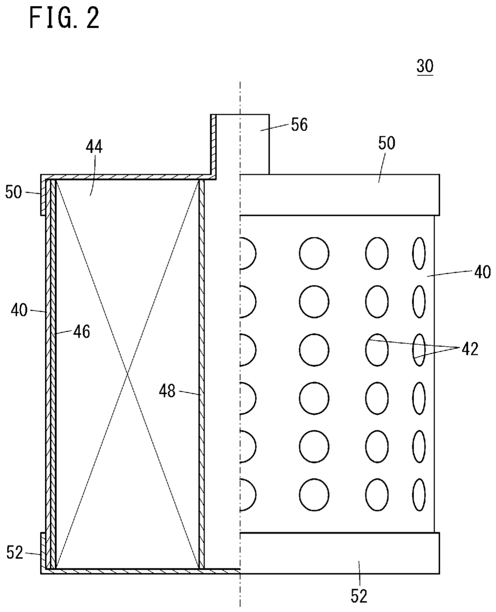

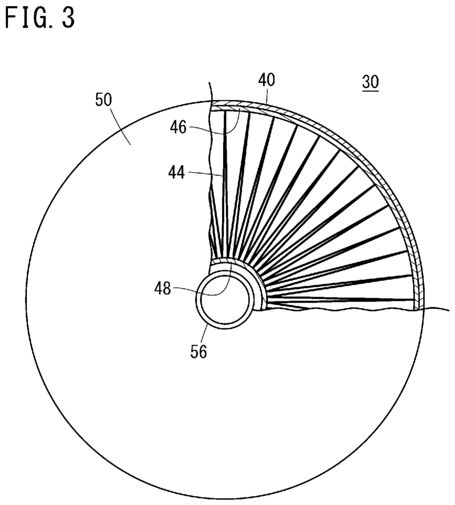

FIGS. 2 and 3 are partial cross-sectional views of the electrical discharge machine filter 30. FIG. 2 is a side view and FIG. 3 is a plan view.

The electrical discharge machine filter 30 includes an outer cylindrical container 40, a filter medium 44, outer peripheral paper 46, a reinforcing member 48, a first face plate 50, and a second face plate 52.

The working fluid enters the inside of the electrical discharge machine filter 30 from a coupler 56, passes through the filter medium 44 in the outer cylindrical container 40, and exits the electrical discharge machine filter 30 from the side surface of the outer cylindrical container 40.

The outer cylindrical container 40 is a container having a cylindrical shape, and includes a large number of communication holes 42 on the side surface thereof. The working fluid exits the electrical discharge machine filter 30 through the communication holes 42.

The filter medium 44 formed of filter paper folded in a bellows shape is accommodated inside the outer cylindrical container 40. The outer peripheral paper 46 is provided between the filter medium 44 and the outer cylindrical container 40. The outer peripheral paper 46 suppresses rubbing between the filter medium 44 and the outer cylindrical container 40, and thereby suppresses damage to the filter medium 44. As the filter medium 44, a sintered filter medium may be used instead of the filter paper.

The reinforcing member 48 having a cylindrical shape is provided inside the outer cylindrical container 40. The first face plate 50 and the second face plate 52 are fixed to the outer cylindrical container 40 and to the reinforcing member 48. The first face plate 50 is provided with the coupler 56 that allows communication between the inside and the outside of the electrical discharge machine filter 30.

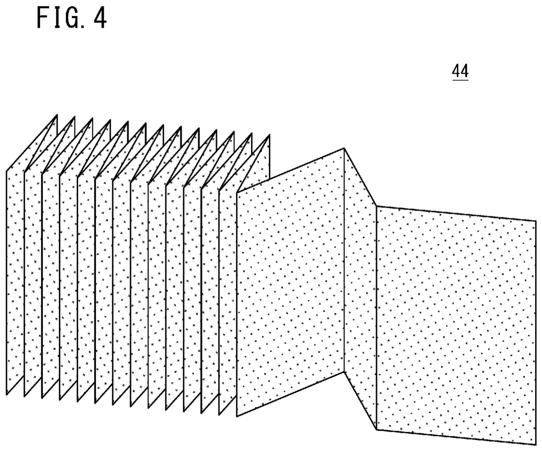

FIG. 4 is a schematic diagram of the filter medium 44. The filter medium 44 is impregnated with a chemical agent. Examples of the chemical agent include sodium hydrogen sulfite, sodium carbonate, sodium sulfate, calcium hydroxide, sodium disulfite (sodium pyrosulfite), potassium disulfite (potassium pyrosulfite), magnesium sulfate, and magnesium sulfate heptahydrate. By the working fluid passing through the electrical discharge machine filter 30, the chemical agent is added to the working fluid.

The working fluid to which the chemical agent is added contains at least one type of cation selected from potassium ion, calcium ion, sodium ion, and magnesium ion, and at least one type of anion selected from sulfate ion, sulfite ion, disulfite ion, hydrogen sulfite ion, hydroxide ion, nitrate ion, and nitrite ion.

### [Experimental Results]

The inventors of the present invention conducted an experiment for determining the life of the electrical discharge machine filter 30 by performing electrical discharge machining on workpieces made of an aluminum-based material in a plurality of types of working fluids containing different ions.

It was confirmed that the life of the electrical discharge machine filter 30 was prolonged in the case where the working fluid contains at least one cation selected from potassium ion, calcium ion, sodium ion, and magnesium ion, and at least one anion selected from sulfate ion, sulfite ion, disulfite ion, hydrogen sulfite ion, hydroxide ion, nitrate ion, and nitrite ion. The working fluid containing the above-described ions has a lower resistivity than the conventional working fluid sent to the work-pan.

In the case where sodium hydrogen sulfite is added to the working fluid, aluminum oxide and aluminum oxide trihydrate are generated in the working fluid during electrical discharge machining of a workpiece made of an aluminum-based material. On the other hand, in the case where sodium hydrogen sulfite is not added to the working fluid, aluminum hydroxide is generated in the working fluid during electrical discharge machining of a workpiece made of an aluminum-based material. It is considered that, by adding sodium hydrogen sulfite to the working fluid, aluminum oxide and aluminum oxide trihydrate are generated instead of aluminum hydroxide that shortens the life of the electrical discharge machine filter 30.

It is considered that the generation of aluminum hydroxide is suppressed also in the case where sodium carbonate, sodium sulfate, calcium hydroxide, sodium disulfite (sodium pyrosulfite), potassium disulfite (potassium pyrosulfite), magnesium sulfate, or magnesium sulfate heptahydrate is added to the working fluid.

### [Operational Effect]

The electrical discharge machine filter 30 of the present embodiment includes the filter medium 44 capable of removing sludge contained in the working fluid, and the chemical agent that lowers the resistivity of the working fluid. The chemical agent that lowers the resistivity can suppress the generation of aluminum hydroxide. Suppressing the generation of aluminum hydroxide suppresses the clogging of the electrical discharge machine filter 30. This makes it possible to extend the life of the electrical discharge machine filter 30.

Further, the electrical discharge machine filter 30 of the present embodiment includes the filter medium 44 impregnated with the chemical agent. Since the filter medium 44 is impregnated with the chemical agent, the chemical agent is sufficiently contained in the working fluid. Therefore, the generation of aluminum hydroxide can be suppressed, and the clogging of the electrical discharge machine filter 30 is suppressed. This makes it possible to extend the life of the electrical discharge machine filter 30.

Further, in the electrical discharge machine filter 30 of the present embodiment, the chemical agent is a chemical agent that enables adding, to the working fluid, of at least one type of cation selected from potassium ion, calcium ion, sodium ion, and magnesium ion, and at least one type of anion selected from sulfate ion, sulfite ion, disulfite ion, hydrogen sulfite ion, hydroxide ion, nitrate ion, and nitrite ion. Such a chemical agent can suppress the generation of aluminum hydroxide. Suppressing the generation of aluminum hydroxide suppresses the clogging of the electrical discharge machine filter 30. This makes it possible to extend the life of the electrical discharge machine filter 30.

### [Second Embodiment]

The electrical discharge machine filter 30 of the first embodiment includes the filter medium 44 impregnated with a chemical agent. In contrast, the electrical discharge machine filter 30 of the present embodiment includes a water-soluble container 58 containing a chemical agent.

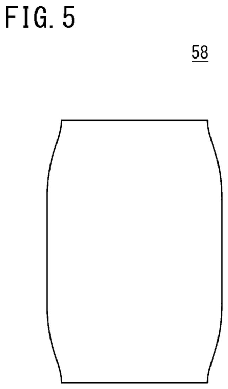

FIG. 5 is a schematic diagram of the water-soluble container 58. The water-soluble container 58 is made of wafer, for example. By the working fluid coming into contact with the water-soluble container 58, the water-soluble container 58 is dissolved in the working fluid, and the chemical agent contained in the water-soluble container 58 is added to the working fluid.

The water-soluble container 58 is accommodated between filter paper and filter paper that are folded in a bellows shape. The water-soluble container 58 may be accommodated between the filter medium 44 and the outer peripheral paper 46. The water-soluble container 58 may be accommodated between the filter medium 44 and the reinforcing member 48. The water-soluble container 58 may be attached to the first face plate 50. The water-soluble container 58 may be attached to the second face plate 52. The water-soluble container 58 may be accommodated inside the coupler 56. In the case where the filter medium 44 is a sintered filter medium, the water-soluble container 58 may be accommodated in an accommodation pocket formed in the filter medium 44.

### [Third Embodiment]

In the electrical discharge machine filter 30 according to the first embodiment, the filter medium 44 is impregnated with a chemical agent. In contrast, the electrical discharge machine filter 30 of the present embodiment includes a fluid-permeable container 60 containing a chemical agent.

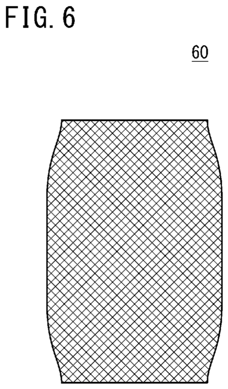

FIG. 6 is a schematic diagram of the fluid-permeable container 60. The fluid-permeable container 60 includes, as a base material, at least one of plant fiber, metal fiber, resin fiber, or protein fiber, for example. The fluid-permeable container 60 may include at least one of paper or nonwoven fabric as a base material. The working fluid can pass through the fluid-permeable container 60. By the working fluid passing through the fluid-permeable container 60, the chemical agent contained in the fluid-permeable container 60 is added to the working fluid.

The fluid-permeable container 60 is accommodated between filter paper and filter paper that are folded in a bellows shape. The fluid-permeable container 60 may be accommodated between the filter medium 44 and the outer peripheral paper 46. The fluid-permeable container 60 may be accommodated between the filter medium 44 and the reinforcing member 48. The fluid-permeable container 60 may be attached to the first face plate 50. The fluid-permeable container 60 may be attached to the second face plate 52. The fluid-permeable container 60 may be accommodated inside the coupler 56. In the case where the filter medium 44 is a sintered filter medium, the fluid-permeable container 60 may be accommodated in an accommodation pocket formed in the filter medium 44.

### [Fourth Embodiment]

The electrical discharge machine filter 30 of the present embodiment is partially different in configuration from the electrical discharge machine filter 30 of the first embodiment.

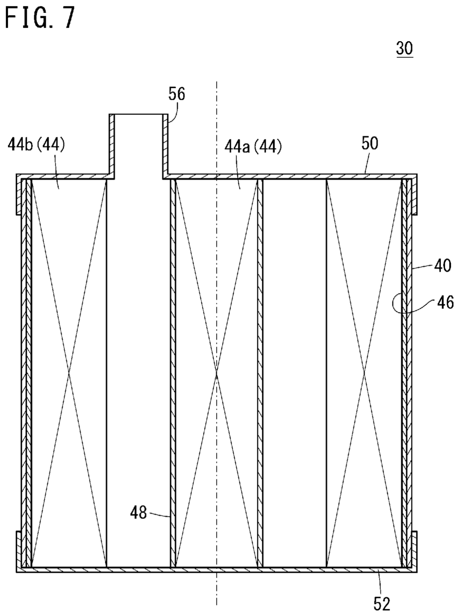

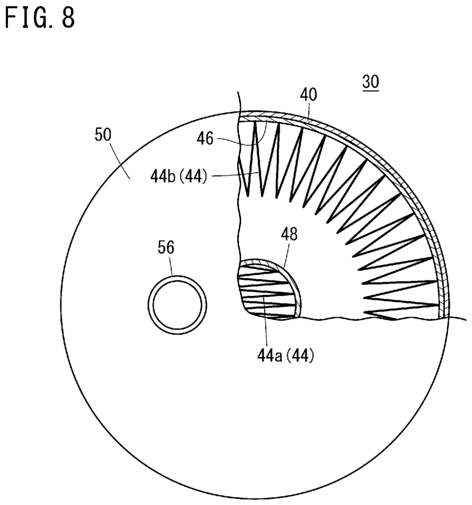

FIG. 7 is a partial cross-sectional view of the electrical discharge machine filter 30. FIG. 8 is a partial cross-sectional view of the electrical discharge machine filter 30. FIG. 7 is a longitudinal cross-sectional view, and FIG. 8 is a plan view.

The electrical discharge machine filter 30 includes a first filter medium 44a and a second filter medium 44b as the filter medium 44. Both the first filter medium 44a and the second filter medium 44b are formed of filter paper folded in a bellows shape. In the case of the electrical discharge machine filter 30 of the present embodiment, both the first filter medium 44a and the second filter medium 44b may be impregnated with a chemical agent. One of the first filter medium 44a or the second filter medium 44b may be impregnated with a chemical agent.

The electrical discharge machine filter 30 of the present embodiment may be provided with the water-soluble container 58 containing a chemical agent. In this case, the water-soluble container 58 may be accommodated between filter paper and filter paper that are folded in a bellows shape. The water-soluble container 58 may be accommodated between the second filter medium 44b and the outer peripheral paper 46. The water-soluble container 58 may be accommodated between the first filter medium 44a and the reinforcing member 48. The water-soluble container 58 may be accommodated between the second filter medium 44b and the reinforcing member 48. The water-soluble container 58 may be accommodated between the first filter medium 44a and the second filter medium 44b.

The electrical discharge machine filter 30 of the present embodiment may be provided with the fluid-permeable container 60 containing a chemical agent. In this case, the fluid-permeable container 60 may be accommodated between filter paper and filter paper that are folded in a bellows shape. The fluid-permeable container 60 may be accommodated between the second filter medium 44b and the outer peripheral paper 46. The fluid-permeable container 60 may be accommodated between the first filter medium 44a and the reinforcing member 48. The fluid-permeable container 60 may be accommodated between the second filter medium 44b and the reinforcing member 48. The fluid-permeable container 60 may be accommodated between the first filter medium 44a and the second filter medium 44b.

According to the electrical discharge machine filter 30 and the electrical discharge machine 10 of the present disclosure, the life of the electrical discharge machine filter 30 can be extended.

The following supplementary notes are further disclosed in relation to the above-described embodiments.

### (Supplementary Note 1)

The electrical discharge machine filter (30) includes the filter medium (44) configured to remove sludge contained in the working fluid, and the chemical agent configured to lower the resistivity of the working fluid.

### (Supplementary Note 2)

In the electrical discharge machine filter according to Supplementary Note 1, the chemical agent may be a chemical agent that serves to add, to the working fluid, at least one type of cation selected from potassium ion, calcium ion, sodium ion, and magnesium ion, and at least one type of anion selected from sulfate ion, sulfite ion, disulfite ion, hydrogen sulfite ion, hydroxide ion, nitrate ion, and nitrite ion.

### (Supplementary Note 3)

In the electrical discharge machine filter according to Supplementary Note 1, the filter medium may be impregnated with the chemical agent.

### (Supplementary Note 4)

The electrical discharge machine filter according to Supplementary Note 1 may further include the water-soluble container (58), and the chemical agent may be contained in the water-soluble container.

### (Supplementary Note 5)

The electrical discharge machine filter according to Supplementary Note 1 may further include the fluid-permeable container (60) that is permeable to a fluid, and the chemical agent may be contained in the fluid-permeable container.

### (Supplementary Note 6)

In the electrical discharge machine filter according to Supplementary Note 5, the fluid-permeable container may include, as a base material, at least one of plant fiber, metal fiber, resin fiber, or protein fiber.

### (Supplementary Note 7)

In the electrical discharge machine filter according to Supplementary Note 5, the fluid-permeable container may include at least one of paper or nonwoven fabric as a base material.

### (Supplementary Note 8)

The electrical discharge machine (10) includes the electrical discharge machine filter according to any one of Supplementary Notes 1 to 7.

Although the present disclosure has been described in detail, the present disclosure is not limited to the above-described individual embodiments. Various additions, replacements, modifications, partial deletions, and the like can be made to these embodiments without departing from the essence and gist of the present disclosure, or without departing from the essence and gist of the present disclosure derived from the claims and equivalents thereof. Further, these embodiments can also be implemented in combination. For example, in the above-described embodiments, the order of operations and the order of processes are shown as examples, and are not limited to these. Furthermore, the same applies to a case where numerical values or mathematical expressions are used in the description of the above-described embodiments.

### REFERENCE SIGNS LIST

10: electrical discharge machine
30: electrical discharge machine filter
44: filter medium
58: water-soluble container
60: fluid-permeable container

## Claims

1. An electrical discharge machine filter, comprising:
a filter medium configured to remove sludge contained in a working fluid; and
a chemical agent configured to lower a resistivity of the working fluid.

2. The electrical discharge machine filter according to claim 1, wherein
the chemical agent is a chemical agent that serves to add, to the working fluid, at least one type of cation selected from potassium ion, calcium ion, sodium ion, and magnesium ion, and at least one type of anion selected from sulfate ion, sulfite ion, disulfite ion, hydrogen sulfite ion, hydroxide ion, nitrate ion, and nitrite ion.

3. The electrical discharge machine filter according to claim 1, wherein
the filter medium is impregnated with the chemical agent.

4. The electrical discharge machine filter according to claim 1, further comprising
a water-soluble container, wherein
the chemical agent is contained in the water-soluble container.

5. The electrical discharge machine filter according to claim 1, further comprising
a fluid-permeable container that is permeable to a fluid, wherein
the chemical agent is contained in the fluid-permeable container.

6. The electrical discharge machine filter according to claim 5, wherein
the fluid-permeable container includes, as a base material, at least one of plant fiber, metal fiber, resin fiber, or protein fiber.

7. The electrical discharge machine filter according to claim 5, wherein
the fluid-permeable container includes at least one of paper or nonwoven fabric as a base material.

8. An electrical discharge machine comprising the electrical discharge machine filter according to any one of claims 1 to 7.
